# DEMANDE DE BREVET EUROPEEN

(11) **EP 0 881 656 A1**
(43) Date de publication de la demande: **02.12.1998**
(21) Numéro de dépôt: 98401281.5
(22) Date de dépôt: 28.05.1998
(51) Int. Cl.: H01J 9/18, H01J 29/82

(54) **Espaceurs pour écran plat de visualisation**

(30) Priorité: 30.05.1997 FR 9706674
(71) Demandeur: COMMISSARIAT A L'ENERGIE ATOMIQUE, 75015 Paris Cédex 15 (FR)
(72) Inventeur: Perrin, Aimé, 38330 Saint Ismier (FR); Boronat, Jean-François, 38100 Grenoble (FR); Danel, Jean-Sébastien, 38100 Grenoble (FR); Delapierre, Gilles, 38180 Seyssins (FR)
(74) Mandataire: Dubois-Chabert, Guy

(57) **Abrégé**

L'invention concerne un espaceur (50) pour écran plat de visualisation à tension de commande élevée et divisé en éléments d'image ou pixels (90). L'espaceur (50) constitue un profilé dont la section est telle qu'il s'insère entre au moins deux pixels de l'écran.

L'invention concerne également le procédé de fabrication de tels espaceurs et leur utilisation dans des écrans plats de visualisation, en particulier dans des dispositifs de visualisation par cathodoluminescence excitée par émission de champ.

## Description

La présente invention se rapporte à des espaceurs pour écran plat de visualisation. Elle concerne aussi leur procédé de fabrication et leur utilisation dans des écrans plats de visualisation, en particulier dans des dispositifs de visualisation par cathodoluminescence excitée par émission de champ.

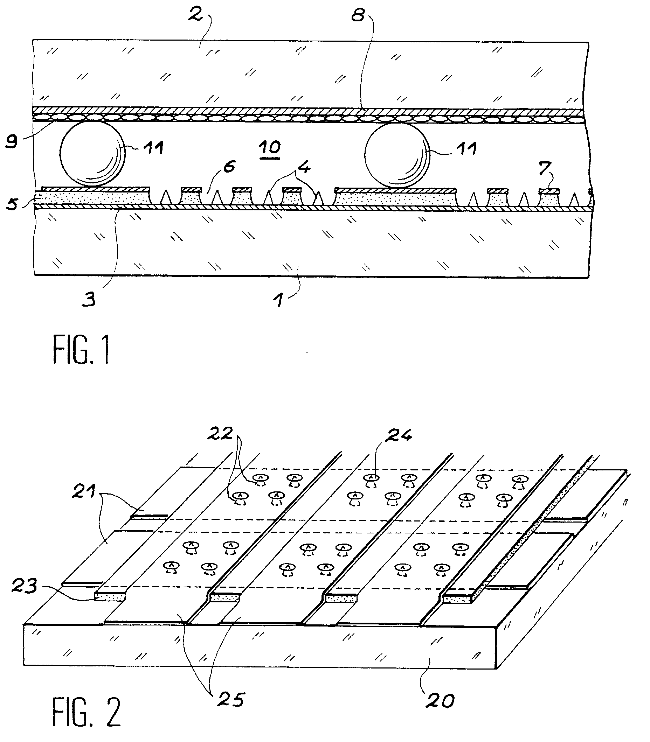

Un dispositif de visualisation par cathodoluminescence excitée par émission de champ selon l'art connu est représenté en coupe transversale à la figure 1. Ce dispositif, en forme d'écran, est limité par deux lames de verre 1 et 2. La lame 1 supporte une cathode 3 pourvue de pointes émissives 4. Une couche isolante 5 est déposée sur la cathode 3 en présentant des trous 6 afin de dégager les pointes émissives 4. La couche isolante 5 est recouverte d'une métallisation 7 servant de grille d'extraction des électrons émis par les pointes 4. La lame 2 supporte, sur sa face interne, une électrode 8 jouant le rôle d'anode qui supporte à son tour une couche 9 de matériau cathodoluminescent encore appelé luminophore.

Si le dispositif est destiné a être regardé du côté de la lame 2, l'électrode 8 doit être transparente et est par exemple constituée d'oxyde mixte d'étain et d'indium (électrode ITO).

Les lames 1 et 2 sont maintenues a une distance déterminée l'une de l'autre et sont séparées par un espace 10 dans lequel on a fait le vide. Des espaceurs 11 permettent de maintenir cette distance déterminée malgré la pression atmosphérique qui s'exerce sur les lames du dispositif.

Dans des écrans plats du type à émission de champ, comme celui représenté à la figure 1, il est important de maintenir un vide poussé entre les deux lames. De ce fait, la différence de pression avec l'extérieur crée une force qui tend à écraser l'écran. Pour des écrans dont la taille est supérieure à quelques centimètres, l'utilisation d'espaceurs est indispensable. Ces espaceurs doivent présenter certaines propriétés. Ils doivent bien sûr être capables de résister à l'écrasement dû à la pression environnante. Leur résistance électrique doit être suffisamment grande pour éviter les amorçages entre les électrodes situées de part et d'autre de l'espace intérieur alors que cet espace intérieur est soumis à des différences de potentiel atteignant quelques centaines de volts (typiquement 300 V) et qui iront en s'accroissant dans les applications futures (jusqu'à plusieurs milliers de volts). Les espaceurs doivent pouvoir supporter les températures relativement élevées (de l'ordre de 400 à 450°C) nécessaires pour le scellement des dispositifs. Enfin, ces espaceurs doivent être suffisamment fins pour rester invisibles à un utilisateur de l'écran.

Pour les écrans plats à émission de champ actuels, c'est-à-dire travaillant sous 300 V, l'écartement entre les deux électrodes est de l'ordre de 200 µm. Cet écartement est réalisé par des billes (comme cela est représenté sur la figure 1) ou par des colonnettes de verre réparties uniformément.

Pour des dispositifs destinés à travailler sous plus haute tension (quelques milliers de volts), l'écartement entre es deux lames doit être augmenté. Cet écartement peut alors varier entre 0,5 mm et quelques millimètres. Dans ce cas, les billes, qui devraient être du même diamètre, deviennent visibles par l'utilisateur de l'écran. Quant aux colonnettes, qui devraient conserver leur diamètre actuel de 25 à 50 µm, leur hauteur les rendraient trop fragiles.

Ce problème est encore accentué par le fait que les écrans de grande taille utilisent des sources d'électrons à micropointes à commande matricielle, ce qui laisse peu de place pour les espaceurs.

La figure 2 représente, vue en perspective, une telle source d'électrons à micropointes. Sur une face d'une lame de verre 20, on a déposé un réseau de colonnes conductrices 21 permettant d'alimenter des pointes émissives 22 puis une couche isolante 23. Des trous 24 pratiqués dans la couche isolante 23 permettent de dégager les micropointes 22. La grille d'extraction des électrons est constituée par un réseau de lignes conductrices 25 perpendiculaires aux colonnes 21 et pourvues de trous alignés avec les trous 24 de la couche isolante pour dégager les micropointes 22. En alimentant de manière appropriée une ligne et une colonne, on obtiendra une émission d'électrons pour les pointes de l'élément d'image (ou pixel) situé au croisement de cette ligne et de cette colonne.

Pour que les espaceurs maintenant l'écartement entre les deux lames de l'écran ne soient pas gênants, il faut les placer soit dans les interlignes, soit dans les intercolonnes, soit au croisement des interlignes et des intercolonnes. Ceci impose pour les espaceurs utilisés classiquement (billes ou colonnes) un diamètre de quelques dizaines de µm typiquement 30 µm pour des écrans de haute définition.

Avec les espaceurs de l'art connu, il n'est donc pas possible d'obtenir des écrans de haute définition fonctionnant sous tension élevée, c'est-à-dire nécessitant un écartement important entre lames.

La présente invention apporte une solution à ce problème.

Elle a pour objet un procédé de réalisation collective d'espaceurs pour écran plat de visualisation à tension de commande élevée et divisé en éléments d'image ou pixels, caractérisé en ce qu'il comporte les étapes de :
- gravure anisotrope d'au moins un substrat possédant deux faces principales, parallèles et séparées par une distance déterminée appelée épaisseur du substrat, la gravure laissant subsister des profilés, destinés à constituer lesdits espaceurs, la longueur de chaque profilé correspondant à l'épaisseur du substrat et sa section, dans un plan parallèle aux faces principales du substrat, ayant une forme telle qu'elle peut s'insérer entre les pixels de l'écran sans les recouvrir,
- séparation des espaceurs dudit substrat en vue de leur positionnement à des emplacements déterminés de l'écran plat de visualisation.

L'étape de séparation peut être effectuée pour chacun des espaceurs pris séparément ou, de préférence, de manière collective par paquets d'espaceurs. Le nombre d'espaceurs peut être choisi au cas par cas.

Tout matériau isolant pouvant être gravé de manière anisotrope peut convenir pour constituer le substrat. De préférence, on utilisera des substrats en silicium, en verre photosensible ou en quartz.

Avantageusement, la gravure est menée de façon que l'espaceur soit rattaché au substrat par une partie fragilisée facilitant son détachement du substrat. Cette partie fragilisée peur former un rétrécissement de la section de l'espaceur.

La disposition des espaceurs sur le substrat est avantageusement optimisée en fonction de leur forme et de leurs dimensions de façon à en élaborer un nombre maximum sur ce substrat.

Dans le cas où la longueur du profilé constituant l'espaceur (c'est-à-dire l'épaisseur du substrat) devient telle qu'on perd beaucoup en définition ou que l'on ne conserve pas la géométrie du motif, bien que la gravure soit anisotrope, l'étape de gravure peut comporter la gravure à l'identique d'un premier et d'un deuxième substrat, cette étape de gravure étant suivie d'une étape de superposition des premier et deuxième substrats avec alignement des profilés et scellement des profilés alignés, l'étape de séparation fournissant des espaceurs constitués chacun de deux profilés empilés.

L'invention a aussi pour objet un espaceur pour écran plat de visualisation à tension de commande élevée et divisée en éléments d'image ou pixels, l'espaceur étant destiné à être placé entre au moins deux pixels, caractérisé en ce que l'espaceur constitue un profilé dont la section et telle qu'elle peut s'insérer entre les pixels de l'écran sans les recouvrir.

A titre d'exemple, la section de cet espaceur peut avoir la forme d'une croix ou peut comporter au moins deux branches liées par l'une de leurs extrémités. Elle peut encore comporter au moins deux branches parallèles reliées par une branche transversale, la distance entre deux branches parallèles consécutives étant égale à un nombre entier de pixels. Elle peut aussi comporter une branche le long de laquelle sont répartis des renforts, la distance entre deux renforts consécutifs étant égale à un nombre entier de pixels.

L'invention a encore pour objet un écran plat de visualisation par cathodoluminescence excitée par émission de champ comportant :
- une source d'électrons à micropointes et à commande matricielle divisée en éléments d'image ou pixels,
- une anode cathodoluminescente disposée parallèlement à la source d'électrons à micropointes et à une distance prédéterminée de celle-ci,
- des moyens d'étanchéité permettant de maintenir le vide dans l'espace compris entre la source d'électrons à micropointes et l'anode cathodoluminescente,
- des espaceurs disposés entre la source d'électrons à micropointes et l'anode cathodoluminescente, permettant le maintien de ladite distance prédéterminée et placés entre les pixels, caractérise en ce que, l'écran étant destiné à fonctionner sous tension de commande élevée, les espaceurs sont constitués de profilés, la section de chaque profilé étant telle qu'elle s'insère entre les pixels sans les recouvrir.

L'invention a enfin pour objet un procédé permettant la mise en place d'espaceurs dans l'écran plat de visualisation défini ci-dessus, caractérisé en ce qu'il comporte l'utilisation d'un outil de préhension des espaceurs, l'encollage d'une extrémité de chaque espaceur, le positionnement de l'extrémité encollée de chaque espaceur sur un emplacement déterminé de la source d'électrons à micropointes.

Avantageusement, les espaceurs étant disponibles sur un support à un pas correspondant à une fraction du pas de leur emplacement sur la source d'électrons à micropointes, l'outil de préhension prélève plusieurs espaceurs simultanément sur le support et les positionne simultanément sur la source d'électrons à micropointes après avoir multiplié leur pas par une valeur appropriée. Le support des espaceurs peut être un substrat sur lequel ils ont été gravés.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en coupe transversale d'un dispositif de visualisation par cathodoluminescence excitée par émission de champ selon l'art connu,
- la figure 2 est une vue en perspective d'une source d' électrons à micropointes et à commande matricielle utilisée dans un écran de visualisation selon l'art connu,
- les figures 3 à 8 représentent différents types d'espaceurs selon la présente invention, ces espaceurs étant encore solidaires du substrat sur lequel ils ont été élaborés,
- les figures 9 à 13 sont des vues représentatives de la disposition des espaceurs selon la présente invention par rapport aux pixels d'un écran de visualisation à accès matriciel,
- la ligue 14 illustre la réalisation d'espaceurs selon la présente invention et élaborés à partir de deux substrats graves et scellés l'un à l'autre.

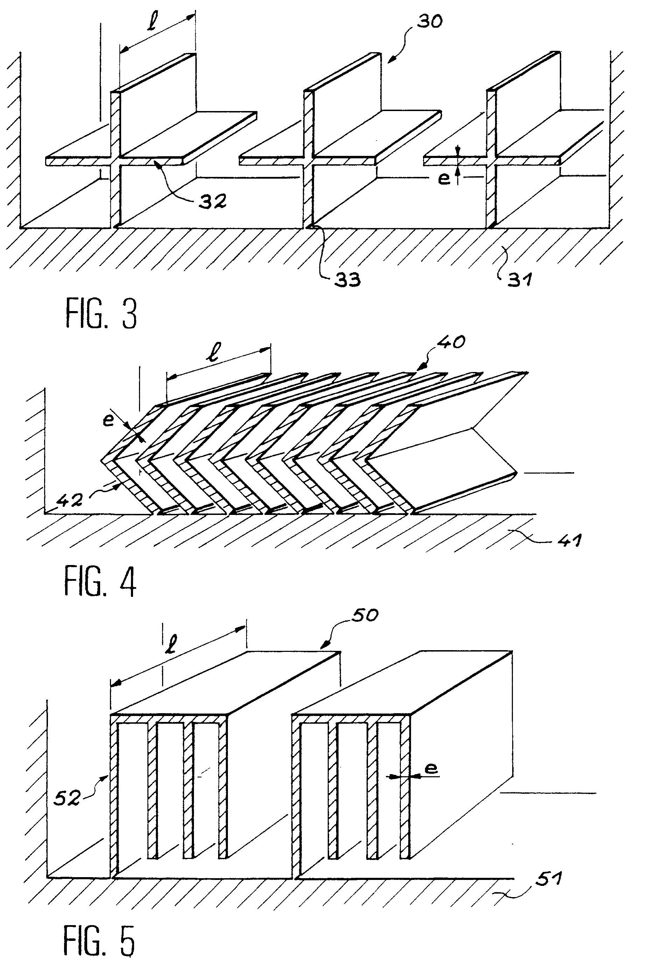

La figure 3 représente un premier type d'espaceurs selon la présente invention, ces espaceurs étant encore solidaires du substrat où ils ont été gravés. Les nouvelles techniques de gravure du silicium, du quartz ou de nouveaux matériaux, tels que le verre photosensible, permettent d'obtenir une gravure anisotrope et donc de conserver une géométrie fine (quelques dizaines de µm,) sur des profondeurs relativement importantes (de 0,5 à 1 mm). Ces techniques de gravure permettent de réaliser des éléments de forme géométrique très variée.

La figure 3 montre trois espaceurs 30 gravés dans l'épaisseur d'un substrat 31, par exemple en silicium. La gravure a été faite dans un substsrat d'épaisseur l comprise entre 0,5 et 1 mm. Chaque espaceur 30 constitue un profilé dont la section 32, en forme de croix, procurant une section ouverte au profilé, comprend quatre branches de longueurs égales, deux branches consécutives formant entre elles un angle droit. L'épaisseur e de chaque branche est par exemple de l'ordre de 30 µm,. La longueur l de chaque espaceur, dans la direction du profilé, correspond à la distance désirée entre les plaques de l'écran de visualisation.

La figure 4 représente un deuxième type d'espaceurs selon la présente invention. Les espaceurs 40 sont comme précédemment gravés dans un substrat 41, par exemple en silicium. Chaque espaceur 40 constitue un profilé dont la section 42 comprend deux branches perpendiculaires entre elles et de longueurs égales procurant une section ouverte au profilé. L'épaisseur e de chaque branche peut être de 30 µm. La longueur l de chaque espaceur, dans la direction du profilé, correspond à la distance désirée entre les plaques de l'écran de visualisation.

La figure 5 représente un troisième type d'espaceurs selon la présente invention. Les espaceurs 50 sont comme précédemment gravés dans un substrat 51, par exemple en silicium. Chaque espaceur 50 constitue un profilé dont la section 52 comprend plusieurs branches parallèles entre elles et perpendiculaires au substrat 51 procurant une section ouverte au profilé. Une branche transversale supérieure, parallèle au substrat, réunit les branches parallèles. Chaque espaceur 50 est encore relié au substrat par l'une de ses branches parallèles qui est plus longue que les autres. L'épaisseur e de chaque branche (parallèle ou transversale) peut être de 30 µm. La longueur l de chaque espaceur 50, dans la direction du profilé, correspond à la distance désirée entre les plaques de l'écran de visualisation.

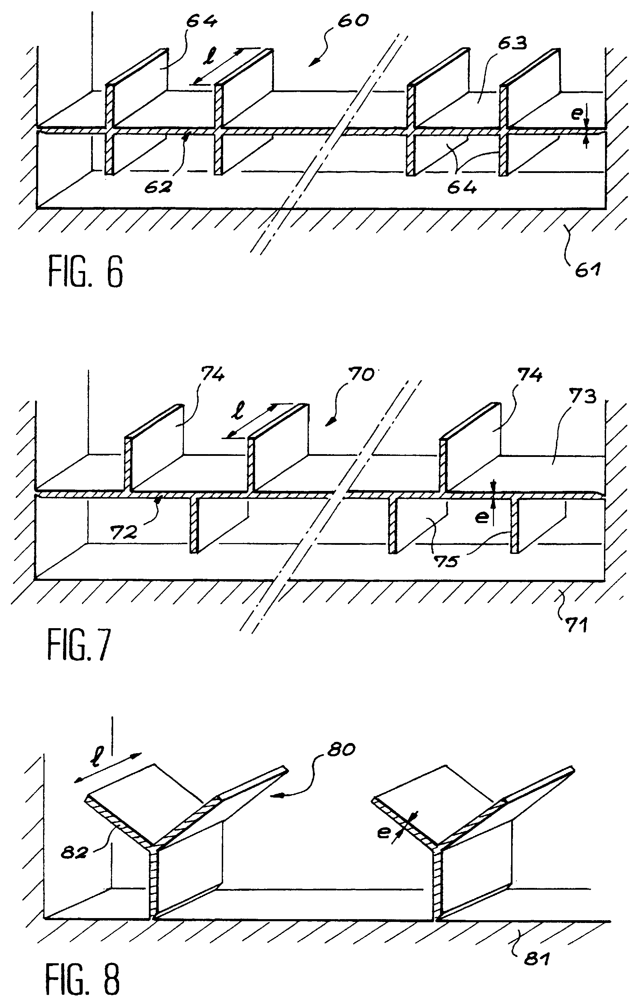

La figure 6 représente une première variante d'un quatrième type d'espaceurs selon la présente invention. Les espaceurs 60 sont comme précédemment gravés dans un substrat 61, par exemple en silicium. Chaque espaceur 60 constitue un profilé dont la section 62 comprend une branche principale 63 sur laquelle viennent se greffer des renforts 64 disposés symétriquement par rapport à la branche 63 et procurant une section ouverte au profilé.

La figure 7 représente une seconde variante du quatrième type d'espaceurs selon la présente invention. Comme précédemment, les espaceurs 70 sont gravés dans un substrat 71 et la secion 72 de chaque espaceur 70 comprend une branche principale 73 sur laquelle viennent se greffer des renforts procurant une section ouverte au profilé. Contrairement à la première variante, les renforts 74 situés d'un côté de la branche principale 73 sont décalés par rapport aux renforts 75 situés de l'autre côté de la branche principale.

L'épaisseur e des branches est par exemple de l'ordre de 30 µm. La longueur l de chaque profilé correspond à la distance désirée entre les plaques de l'écran de visualisation.

La figure 8 représente un cinquième type d'espaceurs selon la présente invention. Les espaceurs 80 sont comme précédemment gravés dans un substrat 81, par exemple en silicium ou en quartz. Chaque espaceur 80 constitue un profilé dont la section 82 comprend trois branches faisant, dans le cas présent, un angle de 120° entre elles et dont l'une est reliée au substrat. Ce profilé possède aussi une section ouverte. L'épaisseur e de chaque branche peut être de 30 µm. La longueur l de chaque espaceur 80, dans la direction du profilé, correspond à la distance désirée entre les plaques de l'écran de visualisation.

Pour ces cinq types d'espaceurs, dont le nombre n'est pas limitatif, l'épaisseur des branches est adaptée à la largeur des interpistes, c'est-à-dire à la largeur des espaces séparant les lignes d'adressage et à la largeur des espaces séparant les colonnes d'adressage. Dans le cas des espaceurs 50 (voir la figure 5), 60 (voir la figure 6) et 70 (voir la figure 7), la distance entre deux branches parallèles consécutives représente un nombre entier de pixels (de 1 à plusieurs pixels).

Les espaceurs selon la présente invention étant réalisés par gravure anisotrope, il n'y a pas de limitation de forme pour leur section. Celle-ci peut être adaptée à la géométrie des pixels.

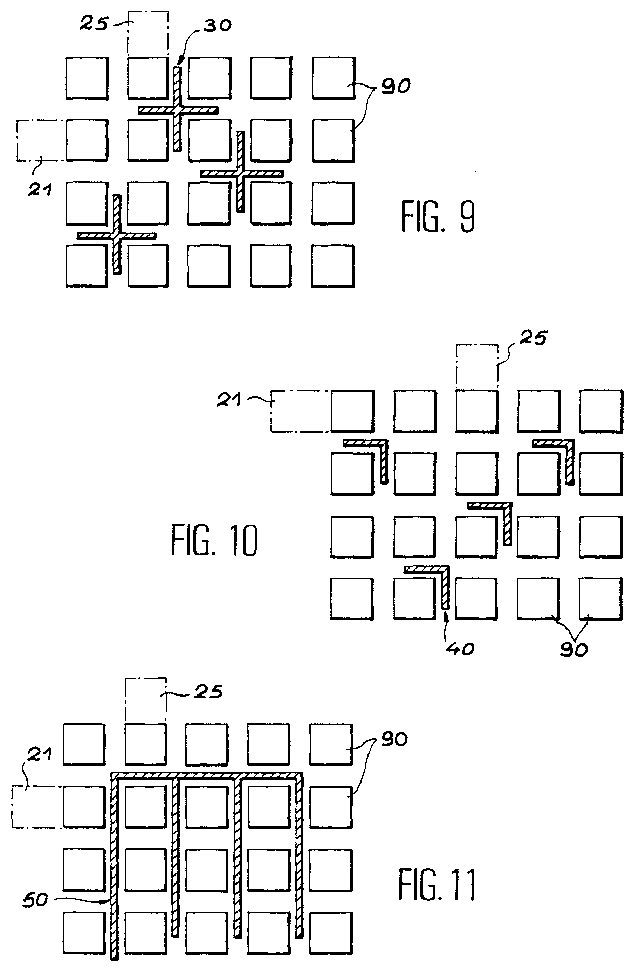

Les figures 9 à 13 illustrent, de manière schématique, la disposition des espaceurs selon l'invention par rapport aux pixels d'un écran de visualisation. Les pixels ont été figurés par des carrés 90 représentant le croisement des lignes et des colonnes d'adressage. Les figures 9 à 13 correspondent donc à une vue de dessus de la source d'électrons à micropointes représentée en perspective à la figure 2. Pour cette raison, une seule ligne d'adressage 21 et une seule colonne d'adressage 25 ont été amorcées en trait mixte.

La figure 9 montre comment s'insèrent les espaceurs 30 (vus en perspective sur la figure 3), dont on ne voit que la forme de la section, entre les pixels 90. La longueur des branches peut couvrir plusieurs pixels.

La figure 10 montre comment s'insèrent les espaceurs 40 (vus en perspective sur la figure 4), dont on ne voit que la forme de la section, entre les pixels 90. Là aussi, la longueur des branches peut couvrir plusieurs pixels.

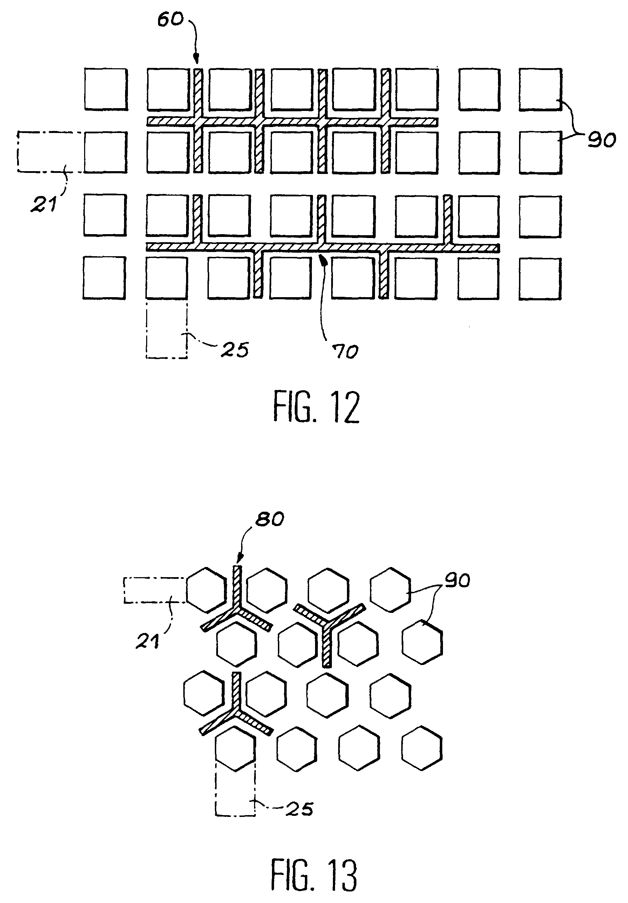

La figure 11 montre comment s'insèrent les espaceurs 50 (vus en perspective sur la figure 5), dont on ne voit que la forme de la section, entre les pixels 90. Deux branches parallèles consécutives peuvent encadrer une ou plusieurs rangées de pixels.

La figure 12 montre comment s'insèrent les espaceurs 60 ou 70 (vus en perspective respectivement sur les figures 6 et 7), dont on ne voit que la forme de la section, entre les pixels 90. La longueur des branches peut couvrir plusieurs pixels.

La figure 13 montre comment s'insèrent les espaceurs 80 (vus en perspective sur la figure 8), dont on ne voit que la forme de la section, entre les pixels 90 qui sont dans ce cas de forme hexagonale.

Pour faciliter la manipulation des espaceurs, ceux-ci peuvent rester attachés au substrat dans lequel ils ont été gravés par l'une de leurs branches. La mise en place d'un espaceur consiste alors à saisir cet espaceur au moyen d'un outil de préhension adapté à sa forme, à effectuer un mouvement de torsion pour le détacher de son substrat, à encoller l'une des extrémités de l'espaceur en le posant sur un tampon pourvu de colle, puis à le positionner à un endroit choisi sur la source d'électrons à micropointes. Pour permettre un détachement plus facile des espaceurs, la gravure peut avoir été menée de façon à prévoir un rétrécissement de la branche de chaque espaceur qui le retient au substrat, au niveau de son rattachement. Un exemple en est montré à la figure 3 avec le rétrécissement 33.

Cette opération de manipulation est répétée autant de fois qu'il y a d'espaceurs à mettre en place.

Une mise en place de façon collective est possible si le pas des espaceurs sur l'écran est un multiple du pas des espaceurs sur le substrat à partir duquel ils sont élaborés. Un outil de préhension adapté peut alors saisir plusieurs espaceurs et les placer en une seule opération, au pas désiré, sur la source d'électrons à micropointes.

Les espaceurs sont rendus solidaires de la source d'électrons à micropointes après polymérisation de la colle. L'écran de visualisation peut alors être assemblé.

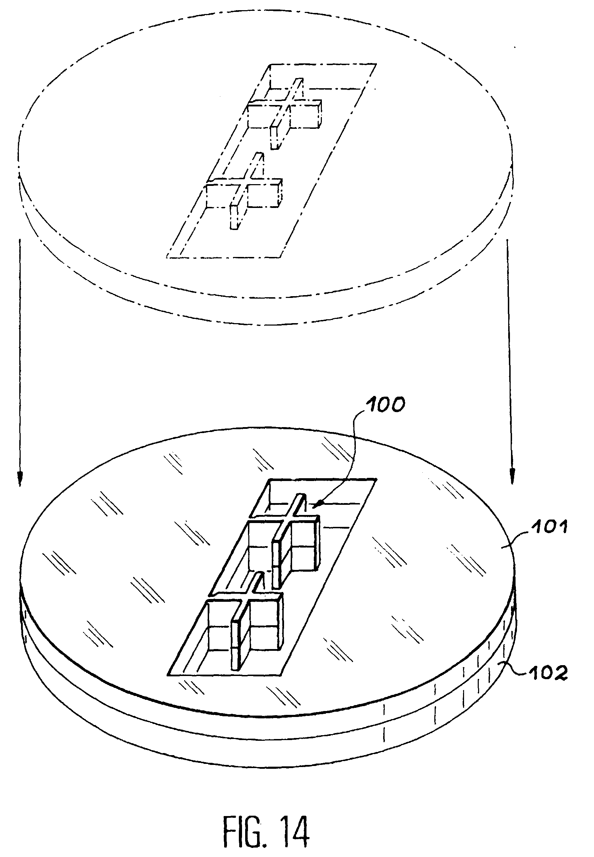

La figure 14 illustre l'assemblage de deux substrats 101 et 102 gravés de façon identique avant leur assemblage. Les substrats 101 et 102 sont superposés, avec alignement des structures gravées, et scellés. On obtient des espaceurs 100 dont la longueur, dans la direction du profilé, est la somme des épaisseurs des substrats 101 et 102.

## Revendications

1. Procédé de réalisation collective d'espaceurs (30,40,50,60,70,80) pour écran plat de visualisation à tension de commande élevée et divisé en éléments d'image ou pixels (90), caractérisé en ce qu'il comporte les étapes de :
- gravure anisotrope d'au moins un substrat (31,41,51,61,71,81) possédant deux faces principales, parallèles et séparées par une distance déterminée appelée épaisseur du substrat, la gravure laissant subsister des profilés, destinés à constituer lesdits espaceurs, la longueur de chaque profilé correspondant à l'épaisseur du substrat et sa section (32,42,52,62,72,82), dans un plan parallèle aux faces principales du substrat, ayant une forme telle qu'elle peut s'insérer entre les pixels de l'écran sans les recouvrir,
- séparation des espaceurs dudit substrat en vue de leur positionnement à des emplacements déterminés de l'écran plat de visualisation.

2. Procédé selon la revendication 1, caractérisé en ce que le substrat est en silicium, en verre photosensible ou en quartz.

3. Procédé selon l'une des revendications 1 ou 2, caractérisé en ce que l'étape de gravure est menée de façon que chaque profilé (30) reste rattaché au substrat (31) par une partie fragilisée (33) facilitant son détachement dudit substrat.

4. Procédé selon la revendication 3, caractérisé en ce que l'étape de gravure est menée de façon que ledit profilé reste rattaché au substrat par une partie formant un rétrécissement (33) de sa section.

5. Procédé selon l'une quelconque des revendications 1 à 4, caractérisé en ce que l'étape de gravure comporte la gravure à l'identique d'un premier (101) et d'un deuxième substrat (102), cette étape de gravure étant suivie d'une étape de superposition des premier et deuxième substrats (101, 102) avec alignement des profilés et scellement des profilés alignés, l'étape de séparation fournissant des espaceurs (100) constitués chacun de deux profilés empilés.

6. Espaceur (30,40,50,60,70,80) pour écran plat de visualisation à tension de commande élevée et divisé en éléments d'image ou pixels (90), l'espaceur étant destiné à être placé entre su moins deux pixels, caractérisé en ce que l'espaceur constitue un profilé dont la section (32,42,52,62,72,82) est telle qu'elle peut s'insérer entre les pixels de l'écran sans les recouvrir.

7. Espaceur (30) selon la revendication 6, caractérisé en ce que ladite section (32) a une forme de croix.

8. Espaceur (40,80) selon la revendication 6, caractérisé en ce que ladite section (42,82) comporte au moins deux branches liées par l'une de leurs extrémités.

9. Espaceur (50) selon la revendication 6, caractérisé en ce que ladite section (52) comporte au moins deux branches parallèles reliées par une branche transversale, la distance entre deux branches parallèles consécutives étant égale à un nombre entier de pixels.

10. Espaceur (60,70) selon la revendication 6, caractérisé en ce que ladite section (62,72) comporte une branche (63,73) le long de laquelle sont répartis des renforts (64,74,75), la distance entre deux renforts consécutifs étant égale à un nombre entier de pixels.

11. Espaceur (30,40,50,60,70,80,90,100) selon l'une quelconque des revendications 6 à 10, caractérisé en ce qu'il est en silicium, en verre photosensible ou en quartz.

12. Ecran plat de visualisation par cathodoluminescence excitée par émission de champ comportant :
- une source d'électrons à micropointes et à commande matricielle divisée en éléments d'image ou pixels (90),
- une anode cathodoluminescente disposée parallèlement à la source d'électrons à micropointes et à une distance prédéterminée de celle-ci,
- des moyens d'étanchéité permettant de maintenir le vide dans l'espace compris entre la source d'électrons à micropointes et l'anode cathodoluminescente,
- des espaceurs (30,40,50,60,70,80) disposés entre la source d'électrons à micropointes et l'anode cathodoluminescente, permettant le maintien de ladite distance prédéterminée et placés entre les pixels,
caractérisé en ce que, l'écran étant destiné à fonctionner sous tension de commande élevée, les espaceurs sont constitués de profilés, la section (32,42,52,62,72,82) de chaque profilé étant telle qu'elle s'insère entre les pixels (90) sans les recouvrir.

13. Ecran plat de visualisation selon la revendication 12, caractérisé en ce que la section (32) de chaque profilé a une forme de croix.

14. Ecran plat de visualisation selon la revendication 12, caractérisé en ce que la section (42,82) de chaque profilé comporte au moins deux branches liées par l'une de leurs extrémités.

15. Ecran plat de visualisation selon la revendication 12, caractérisé en ce que la section (52) de chaque profilé comporte au moins deux branches parallèles reliées par une branche transversale, la distance entre deux branches parallèles consécutives étant égale à un nombre entier de pixels.

16. Ecran plat de visualisation selon la revendication 12, caractérisé en ce que la section (62,72) de chaque profilé comporte une branche (63,73) le long de laquelle sont répartis des renforts (64,74,75), la distance entre deux renforts consécutifs étant égale à un nombre entier de pixels.

17. Procédé permettant la mise en place d'espaceurs dans l'écran plat de visualisation selon la revendication 12, caractérisé en ce qu'il comporte l'utilisation d'un outil de préhension des espaceurs (30,40,50,60,70,80), l'encollage d'une extrémité de chaque espaceur, le positionnement de l'extrémité encollée de chaque espaceur sur un emplacement détermine de la source d'électrons à micropointes.

18. Procédé selon la revendication 17, caractérisé en ce que, les espaceurs (30,40,50,60,70,80) étant disponibles sur un support à un pas correspondant à une fraction du pas de leur emplacement sur la source d'électrons à micropointes, l'outil de préhension prélève plusieurs espaceurs simultanément sur le support et les positionne simultanément sur la source d'électrons à micropointes après avoir multiplié leur pas par une valeur appropriée.

19. Procédé selon la revendication 18, caractérisé en ce que le support des espaceurs (30,40,50,60,70,80) est un substrat (31,41,51,61,71,81) sur lequel ils ont été gravés.
